# EUROPEAN PATENT APPLICATION

(11) **EP 4 600 070 A1**
(43) Date of publication of application: **13.08.2025**
(21) Application number: 25154217.1
(22) Date of filing: 27.01.2025
(51) Int. Cl.: B60L 3/00, B60L 3/12, B60L 58/26, H01M 10/48

(54) **CONTROLLING ACCESS BY AN ELECTRIC VEHICLE TO A CONTROLLED-ACCESS AREA**

(30) Priority: 05.02.2024 US 202418432556
(71) Applicant: Honeywell International Inc., Charlotte, NC 28202 (US)
(72) Inventor: BORK, Stephan Michael, Charlotte, 28202 (US); HAF, Kevin Michael, Charlotte, 28202 (US); BROWN, Andy Walker, Charlotte, 28202 (US)
(74) Representative: Haseltine Lake Kempner LLP

(57) **Abstract**

Methods, apparatuses, and computer program products for controlling access by an electric vehicle (EV) to a controlled-access area are provided. For example, a computer-implemented method may include receiving data from an EV related to a fire risk in a battery of the EV and determining, using the data received from the EV, whether to allow the EV to enter a controlled-access area.

## Description

### FIELD OF THE INVENTION

Example embodiments of the present disclosure relate generally to electric vehicles and, more particularly, to methods, apparatuses, and computer program products for controlling access by an electric vehicle to a controlled-access area.

### BACKGROUND

Today electric vehicles with lithium-ion (Li-Ion) batteries represent an elevated fire risk compared to traditional internal combustion engine vehicles as Li-Ion batteries can, under certain circumstances, catch fire and burn with an intensity that can make the fire difficult to extinguish. This risk and fire intensity presents a risk when electric vehicles are, for example, loaded into transport vehicles such as cargo ships and ferries or allowed into structures such as parking garages.

Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to methods, apparatuses, and computer program products for controlling access by an electric vehicle (EV) to a controlled-access area.

In accordance with various embodiments of the present disclosure, an apparatus is provided. In some embodiments, the apparatus comprises at least one processor and at least one non-transitory memory comprising program code. In some embodiments, the at least one non-transitory memory and the program code are configured to, with the at least one processor, cause the apparatus to at least: receive data from an electric vehicle (EV) related to a fire risk in a battery of the EV and determine, using the data received from the EV, whether to allow the EV to enter a controlled-access area.

In some embodiments, the data received from the EV comprises real time and/or historical data corresponding to one or more battery fire risk parameters related to the EV.

In some embodiments, the one or more battery fire risk parameters related to the EV are selected from the group consisting of electrolyte outgassing from the battery of the EV, a battery voltage and/or a battery discharge current of the EV, a charging battery voltage and/or a charging battery current of the EV, a temperature of the battery of the EV, a pressure within the battery of the EV, a detected shock, acceleration, and/or deceleration, a geometry of the battery of the EV, a detection of smoke, a detection of an aerosol, a cumulative operating time of the battery of the EV, a serial number of the battery of the EV, a model number of the battery of the EV, and a model number of the EV.

In some embodiments, the at least one non-transitory memory and the program code are configured to, with the at least one processor, cause the apparatus to determine whether to allow the EV to enter the controlled-access area using the data received from the EV and using data received from one or more third parties.

In some embodiments, the data received from one or more third parties comprise data received from a manufacturer of the battery and/or data received from a manufacturer of the EV.

In some embodiments, the data received from one or more third parties comprise data related to other EVs of a same model and/or data related to other batteries of a same model and/or type.

In some embodiments, the data received from the EV comprises a battery fire risk analysis based on one or more battery fire risk parameters related to the EV.

In some embodiments, the at least one non-transitory memory and the program code are configured to, with the at least one processor, cause the apparatus to determine whether to allow the EV to enter an alternate controlled-access area instead of the controlled-access area.

In some embodiments, the at least one non-transitory memory and the program code are configured to, with the at least one processor, cause the apparatus to determine whether to allow the EV to enter the controlled-access area based on a comparison of one or more data points of the data received from the EV to one or more respective thresholds and/or an analysis of one or more trends of the data received from the EV.

In accordance with various embodiments of the present disclosure, a computer-implemented method is provided. In some embodiments, the computer-implemented method comprises receiving data from an electric vehicle (EV) related to a fire risk in a battery of the EV and determining, using the data received from the EV, whether to allow the EV to enter a controlled-access area.

In accordance with various embodiments of the present disclosure, a computer program product is provided. In some embodiments, the computer program product comprises at least one non-transitory computer-readable storage medium having computer-readable program code portions stored therein. In some embodiments, the computer-readable program code portions comprise an executable portion configured to receive data from an electric vehicle (EV) related to a fire risk in a battery of the EV and determine, using the data received from the EV, whether to allow the EV to enter a controlled-access area.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 illustrates an example block diagram of an example system for controlling access by an electric vehicle to a controlled-access area, in accordance with example embodiments of the present disclosure; and
FIG. 2 is an example flowchart illustrating an example method for controlling access by an electric vehicle to a controlled-access area, in accordance with example embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The term "electronically coupled," "electronically coupling," "electronically couple," "in communication with," "in electronic communication with," or "connected" in the present disclosure refers to two or more elements or components being connected through wired means and/or wireless means, such that signals, electrical voltage/current, data and/or information may be transmitted to and/or received from these elements or components.

Various embodiments of the present disclosure provide methods, apparatuses, and computer program products for controlling access by an electric vehicle to a controlled-access area. In various embodiments, such a controlled-access area may be any area, space, building, structure, vehicle (e.g., cargo ship, ferry, train car, etc.), and/or the like into/onto which an EV may enter, for example, to park, load, unload, be transported, or for any suitable purpose, to which it may be desirable to control access by an EV due to potential battery fire risk and to prevent entry by an EV that has an elevated or unacceptable battery fire risk.

In various embodiments, access to such a controlled-access area is only provided to an EV (particularly an EV with a Li-Ion battery) after a battery fire risk determination is found to show no concern (or an acceptable level of concern) of EV Li-Ion battery fire risk.

In various embodiments, the battery fire risk is determined based on one or more battery fire risk parameters, alone or in combination. In example embodiments, the battery fire risk parameters may include, but are not limited to, electrolyte outgassing from the battery, a battery voltage and/or a battery discharge current, a charging battery voltage and/or a charging battery current, a temperature of the battery, a pressure within the battery, a detected shock / acceleration / deceleration that may have occurred, a geometry of the battery (e.g., distance between battery electrodes and/or thickness of the battery electrodes), a detection of smoke near the battery, a detection of an aerosol near the battery, a cumulative operating time of the battery, and/or EV service history (e.g., repairs, insurance claims related to collisions, manufacturer recalls addressed/not addressed, etc.).

While embodiments of the present disclosure are described herein in relation to EVs having a battery (singular), EVs typically use a battery pack that includes hundreds, if not thousands, of individual battery cells, usually grouped together into up to several dozen modules. Embodiments of the present disclosure work with any suitable EV, regardless of the number of batteries, battery packs, modules, or cells.

In various embodiments, the one or more battery fire risk parameters used to determine battery fire risk may be provided by the EV seeking to enter the controlled-access area and/or by a third party (including, but not limited to, a manufacturer of the battery, a manufacturer of the EV, or a data provider). In various embodiments, the one or more battery fire risk parameters used to determine battery fire risk may be based on aggregate fire risk data (e.g., fire risk data related to all or most EVs of a same model and/or to all or most batteries of a same model and/or type).

In various embodiments, the battery fire risk parameters may include information about the battery and/or the EV (such as, but not limited to, a serial number of the battery, a model number of the battery, and a model number of the EV) that enables an apparatus or system controlling access to a controlled-access area to interrogate a third party service to assess the associated battery fire risk (e.g., by determining that the battery is a lower-quality aftermarket battery, that the battery has been recalled by its manufacturer, etc.).

In various embodiments, some of the battery fire risk parameters (e.g., battery voltage, a battery discharge current, charging battery voltage, charging battery current, battery temperature, cumulative operating time of the battery) may be monitored/determined by a battery management system of the EV. In various embodiments, one or more of the battery fire risk parameters (e.g., electrolyte outgassing, pressure within the battery, detected shock, acceleration, and/or deceleration that may have occurred, detection of smoke, detection of an aerosol) are monitored/determined using one or more sensors in the EV in communication with processing circuitry (described below). In various embodiments, one or more of the battery fire risk parameters (e.g., geometry of the battery, repair history, recall history) are obtained from a third party based on information provided by the EV (e.g., EV model, battery model, battery serial number, etc.).

In various embodiments, an apparatus or system controlling access to a controlled-access area receives data from an EV related to a fire risk in a battery of the EV and determines, using the data received from the EV, whether to allow the EV to enter a controlled-access area.

In various embodiments, the data received from the EV comprises real time and/or historical data corresponding to one or more battery fire risk parameters related to the EV. In various embodiments, a combination of real time and historical data is used to determine the battery fire risk and therefore determine whether to allow the EV to access the controlled-access area. In various embodiments, a combination of data from the EV and data from one or more third parties are used to determine the battery fire risk and therefore determine whether to allow the EV to access the controlled-access area.

In various embodiments, an apparatus or system controlling access to a controlled-access area receives battery fire risk parameter data from an EV, analyzes the parameter data to determine the battery fire risk, and based on the determined battery fire risk determines whether to allow the EV to enter a controlled-access area. In various other embodiments, an EV analyzes the parameter data to determine the battery fire risk and transmits the determined battery fire risk to the apparatus or system controlling access to a controlled-access area which then uses that determined battery fire risk from the EV to determine whether to allow the EV to enter a controlled-access area.

In various embodiments, determining whether to allow the EV to enter the controlled-access area may be based on a comparison of one or more data points of the data received from the EV to one or more respective thresholds and/or an analysis of one or more trends of the data received from the EV. For example, access may be denied if the battery temperature is above a predetermined threshold. In various other embodiments, a lower threshold may be used in combination with other data, such as trend data. For example, access may be denied if the battery temperature is below the predetermined threshold but the trend data shows that the battery temperature is steadily and/or rapidly increasing.

In various embodiments, a controlled-access area may have two separated areas or spaces, with EVs of different fire risks allowed in different areas or spaces. Such separated areas may be termed, for example, a primary controlled-access area and an alternate or secondary controlled-access area. For example, a parking area for a business might have a parking structure (also called a parking deck or parking garage) and a surface parking lot. In such embodiments, an EV with a high (or elevated) battery fire risk may not be allowed in the parking structure but may be allowed in the surface parking lot. In such embodiments, the battery fire risk parameter data may be used to determine whether to allow the EV to enter such an alternate controlled-access area instead of the primary controlled-access area.

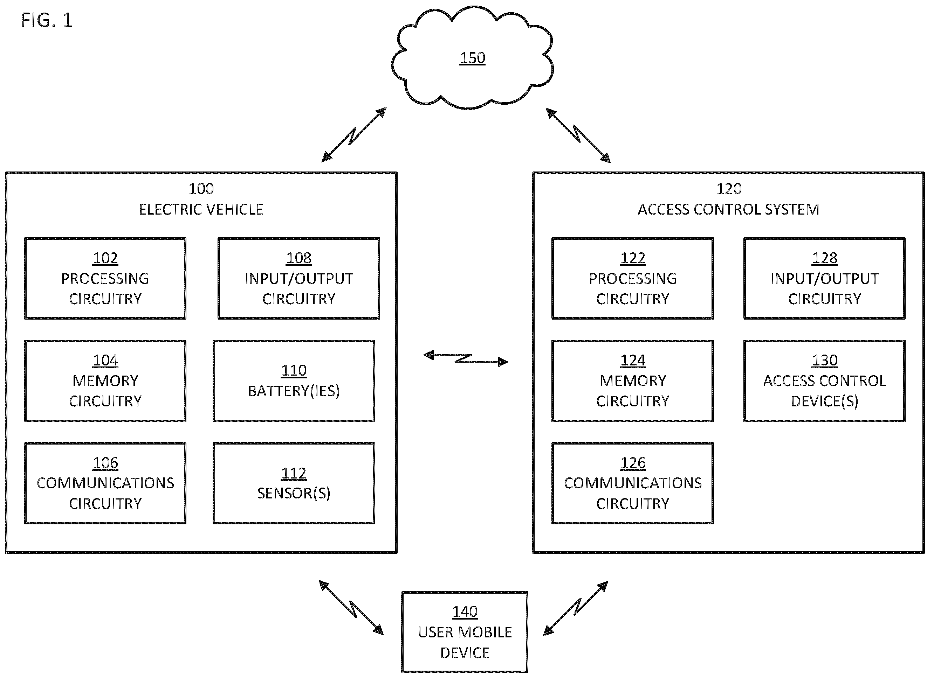

Referring now to the figures, FIG. 1 is an example block diagram of an example system for controlling access by an electric vehicle to a controlled-access area accordance with example embodiments of the present disclosure. In the illustrated embodiment, the example system comprises an EV 100 and an access control system 120. The EV 100 and the access control system 120 may communicate directly with each other, such as via Bluetooth, via a user's (i.e., a driver of the EV) mobile device 140, and/or over a network 150.

In the illustrated embodiment, the EV 100 comprises processing circuitry 102, memory circuitry 104, communications circuitry 106, input/output circuitry 108, one or more batteries or battery packs 110, and one or more sensors 112. In the illustrated embodiment, the access control system 120 comprises processing circuitry 122, memory circuitry 124, communications circuitry 126, input/output circuitry 128, and one or more access control devices 130.

In an example embodiment, the processing circuitry 102 of the EV 100 controls the collection, storage, and transmission of battery fire risk parameters, typically according to configuration data and instructional programming stored in the memory circuitry 104. In some embodiments, the processing circuitry 102 is part of a battery management system of the EV. In some embodiments, the processing circuitry 102 is separate from, but in communication with, a battery management system of the EV. In various embodiments, the processing circuitry 102 can communicate with the EV's battery management system to obtain one or more battery fire risk parameters, with the one or more sensors 112 for detecting/measuring one or more battery fire risk parameters, with the access control system 120 to request access to the controlled-access area and to transmit one or more battery fire risk parameters, and/or with one or more third parties (such as via the network 150). In some example embodiments, the processing circuitry 102 also analyzes the battery fire risk parameter data to determine the battery fire risk and transmits the determined battery fire risk to the access control system 120.

In an example embodiment, the memory circuitry 104, in addition to storing configuration data and instructional programming for the processing circuitry 102, also stores battery fire risk parameter data. In various embodiments, the battery fire risk parameter data may be stored for any suitable length of time (e.g., one month). In various alternative embodiments, the battery fire risk parameter data may additionally or alternatively be stored on the user's mobile device 140 and/or on a remote ("cloud") server accessed via the network 150.

In an example embodiment, the communications circuitry 106 enables the EV 100 to communicate with the access control system 120 to transmit battery fire risk parameter data, such as via Bluetooth, via the user's mobile device 140, and/or via the network 150. In an example embodiment, the input/output circuitry 108 enables the user to interface with the access control system, such as to request access to the controlled-access area. In an example embodiment, the battery 110 comprise any suitable number of Li-Ion batteries or battery packs.

In an example embodiment, the sensors 112 comprise any suitable number and type of sensor for detecting/measuring one or more battery fire risk parameters. For example, the sensors 112 may include one or more temperature sensors for measuring the temperature of the battery 110, one or more pressure sensors for measuring the pressure within the battery, one or more electrolyte sensors for detecting and measuring electrolyte outgassing, and/or one or more smoke detectors for detecting smoke near the battery.

In an example embodiment, the processing circuitry 122 of the access control system 120 controls the receipt, storage (optionally), and analysis of battery fire risk parameters from an EV and the granting or denying of access to the controlled-access area to the EV based on the analysis, typically according to configuration data and instructional programming stored in the memory circuitry 124.

In various embodiments, the processing circuitry 122 can communicate with the EV to obtain one or more battery fire risk parameters. In various embodiments, the processing circuitry 122 can communicate one or more third parties (such as via the network 150), such as to obtain aggregate fire risk data (e.g., fire risk data related to EV models, battery models, etc.) to be used for battery fire risk analysis.

In an example embodiment, the memory circuitry 124, in addition to storing configuration data and instructional programming for the processing circuitry 122, also stores battery fire risk parameter data received from one or more EVs that requested access to the controlled-access area. In various embodiments, the battery fire risk parameter data may be stored for any suitable length of time (e.g., one month). In various alternative embodiments, memory circuitry 124 may periodically obtain and store aggregate fire risk data (e.g., fire risk data related to EV models, battery models, etc.) to be used for battery fire risk analysis without having to obtain such data in real time every time an EV seeks access to the controlled-access area.

In an example embodiment, the communications circuitry 126 enables the access control system 120 to communicate with the EV 100 to obtain battery fire risk parameter data, such as via Bluetooth, via the user's mobile device 140, and/or via the network 150. In an example embodiment, the input/output circuitry 128 enables the user to interface with the access control system, such as to request access to the controlled-access area. In an example embodiment, the access control device 130 comprises any suitable mechanism for allowing or preventing access (e.g., a gate) and/or for indicating whether access has been allowed or denied (e.g., indicator lights).

In various embodiments, the user mobile device 140 may, such as via an access control application executing thereon, provide a user interface for EV to request access to the controlled-access area and initiate/approve the transmission of battery fire risk parameter data from the EV to the access control system.

The access control system 120 and/or the EV 100 may be configured to execute the operations described herein. Although the components are described with respect to functional limitations, it should be understood that the particular implementations necessarily include the use of particular hardware. It should also be understood that certain of the components described herein may include similar or common hardware. For example, two sets of circuitries may both leverage use of the same processor, network interface, storage medium, or the like to perform their associated functions, such that duplicate hardware is not required for each set of circuitries.

The use of the term "circuitry" as used herein with respect to components of the apparatus should therefore be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, storage media, network interfaces, input/output devices, and the like. In some embodiments, other elements of the access control system 120 and/or the EV 100 may provide or supplement the functionality of particular circuitry. For example, the processing circuitry 102, 122 may provide processing functionality, the communications circuitry 106, 126 may provide network interface functionality, the memory circuitry 104, 124 may provide storage functionality, and the like.

In some embodiments, the processing circuitry 102, 122 (and/or co-processor or any other processing circuitry assisting or otherwise associated with the processor) may be in communication with the memory circuitry 104, 124 via a bus for passing information among components of the apparatus. The processing circuitry 102, 122 may be embodied in a number of different ways and may, for example, include one or more processing devices configured to perform independently. Additionally, or alternatively, the processing circuitry 102, 122 may include one or more processors configured in tandem via a bus to enable independent execution of instructions, pipelining, and/or multithreading. The use of the term "processing circuitry" may be understood to include a single core processor, a multi-core processor, multiple processors internal to the apparatus, and/or remote or "cloud" processors.

For example, the processing circuitry 102, 122 may be embodied as one or more complex programmable logic devices (CPLDs), microprocessors, multi-core processors, co-processing entities, application-specific instruction-set processors (ASIPs), and/or controllers. Further, the processing circuitry 102, 122 may be embodied as one or more other processing devices or circuitry. The term circuitry may refer to an entirely hardware embodiment or a combination of hardware and computer program products. Thus, the processing circuitry 102, 122 may be embodied as integrated circuits, application specific integrated circuits (ASICs), field programmable gate arrays (FPGAs), programmable logic arrays (PLAs), hardware accelerators, other circuitry, and/or the like. As will therefore be understood, the processing circuitry 102, 122 may be configured for a particular use or configured to execute instructions stored in volatile or non-volatile media or otherwise accessible to the processing circuitry 102, 122. As such, whether configured by hardware or computer program products, or by a combination thereof, the processing circuitry 102, 122 may be capable of performing steps or operations according to embodiments of the present disclosure when configured accordingly.

In an example embodiment, the processing circuitry 102, 122 may be configured to execute instructions stored in the memory circuitry 104, 124 or otherwise accessible to the processor. Alternatively, or additionally, the processing circuitry 102, 122 may be configured to execute hard-coded functionality. As such, whether configured by hardware or software methods, or by a combination thereof, the processor may represent an entity (e.g., physically embodied in circuitry) capable of performing operations according to an embodiment of the present disclosure while configured accordingly. Alternatively, as another example, when the processing circuitry 102, 122 is embodied as an executor of software instructions, the instructions may specifically configure the processor to perform the algorithms and/or operations described herein when the instructions are executed.

In some embodiments, the memory circuitry 104, 124 may further include or be in communication with volatile media (also referred to as volatile storage, memory, memory storage, memory circuitry and/or similar terms used herein interchangeably). In some embodiments, the volatile storage or memory may also include, such as but not limited to, RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. As will be recognized, the memory circuitry 104, 124 may be used to store at least portions of the databases, database instances, database management system entities, data, applications, programs, program modules, scripts, source code, object code, byte code, compiled code, interpreted code, machine code, executable instructions, and/or the like being executed by, for example, the processing circuitry 102, 122 as shown in FIG. 1. Thus, the databases, database instances, database management system entities, data, applications, programs, program modules, scripts, source code, object code, byte code, compiled code, interpreted code, machine code, executable instructions, and/or the like may be used to control certain aspects of the operation of the access control system 120 and/or the EV 100 with the assistance of the processing circuitry 102, 122 and operating system(s).

In some embodiments, the memory circuitry 104, 124 may further include or be in communication with non-volatile media (also referred to as non-volatile storage, memory, memory storage, memory circuitry and/or similar terms used herein interchangeably). In some embodiments, the memory circuitry 104, 124 may include, such as, but not limited to, hard disks, ROM, PROM, EPROM, EEPROM, flash memory, MMCs, SD memory cards, Memory Sticks, CBRAM, PRAM, FeRAM, RRAM, SONOS, racetrack memory, and/or the like. As will be recognized, the memory circuitry 104, 124 may store databases, database instances, database management system entities, data, applications, programs, program modules, scripts, source code, object code, byte code, compiled code, interpreted code, machine code, executable instructions, and/or the like. The term database, database instance, database management system entity, and/or similar terms used herein interchangeably and in a general sense to may refer to a structured or unstructured collection of information/data that is stored in a computer-readable storage medium.

In various embodiments of the present disclosure, the memory circuitry 104, 124 may also be embodied as a data storage device or devices, as a separate database server or servers, or as a combination of data storage devices and separate database servers. Further, in some embodiments, memory circuitry 104, 124 may be embodied as a distributed repository such that some of the stored information/data is stored centrally in a location within the system and other information/data is stored in one or more remote locations. Alternatively, in some embodiments, the distributed repository may be distributed over a plurality of remote storage locations only. An example of the embodiments contemplated herein would include a cloud data storage system maintained by a third-party provider and where some or all of the information/data required for the operation of the recovery system may be stored. Further, the information/data required for the operation of the recovery system may also be partially stored in the cloud data storage system and partially stored in a locally maintained data storage system. More specifically, memory circuitry 104, 124 may encompass one or more data stores configured to store information/data usable in certain embodiments.

In the example as shown in FIG. 1, one or more instances of circuitry may be part of the memory circuitry 104, 124. In this example, the term "circuitry" refers to one or more data storage units in the memory circuitry 104, 124 that may store executable computer program instructions. When the executable computer program instructions stored in such circuitry are executed by a processing circuitry (such as, but not limited to, the processing circuitry 102, 122 shown in FIG. 1), the executable computer program instructions may cause the processing circuitry to perform one or more functions.

The communications circuitry 106, 126 may be any means such as a device or circuitry embodied in either hardware or a combination of hardware and software that is configured to receive and/or transmit data from/to a network and/or any other device, circuitry, or module in communication with the access control system 120 and/or the EV 100. In this regard, the communications circuitry 106, 126 may include, for example, a network interface for enabling communications with a wired or wireless communication network and/or in accordance with a variety of networking protocols described herein. For example, the communications circuitry 106, 126 may include one or more network interface cards, antennae, buses, switches, routers, modems, and supporting hardware and/or software, or any other device suitable for enabling communications via a network. Additionally, or alternatively, the communication interface may include the circuitry for interacting with the antenna(s) to cause transmission of signals via the antenna(s) or to handle receipt of signals received via the antenna(s).

It is also noted that all or some of the information discussed herein can be based on data that is received, generated and/or maintained by one or more components of the access control system 120 and/or the EV 100. In some embodiments, one or more external systems (such as a remote cloud computing and/or data storage system) may also be leveraged to provide at least some of the functionality discussed herein.

The communications network 150 may embody any of a myriad of network(s) configured to enable communication between two or more computing device(s). In some embodiments, the communications network 150 embodies a private network. In other embodiments, the communications network 150 embodies a public network, for example the Internet.

In some embodiments, the input/output circuitry 108, 128 may be in communication with, respectively, the processing circuitry 102, 122 to provide output to the user and, in some embodiments, to receive an indication of a user input. The input/output circuitry 108, 128 may include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., the memory circuitry 104, 124, and/or the like).

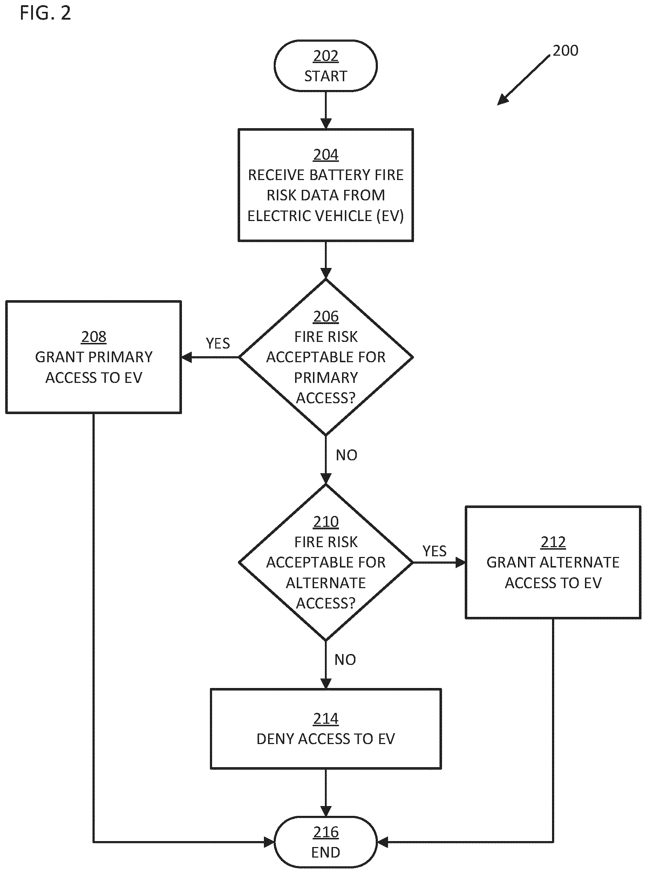

Reference will now be made to FIG. 2, which provides a flowchart illustrating example steps, processes, procedures, and/or operations in accordance with various embodiments of the present disclosure. Various methods described herein, including, for example, example methods as shown in FIG. 2, may provide various technical benefits and improvements. It is noted that each block of the flowchart, and combinations of blocks in the flowchart, may be implemented by various means such as hardware, firmware, circuitry and/or other devices associated with execution of software including one or more computer program instructions. For example, one or more of the procedures described in FIG. 2 may be embodied by computer program instructions, which may be stored by a non-transitory memory of an apparatus employing an embodiment of the present disclosure and executed by a processor in the apparatus. These computer program instructions may direct a computer or other programmable apparatus to function in a particular manner, such that the instructions stored in the computer-readable storage memory produce an article of manufacture, the execution of which implements the function specified in the flowchart block(s).

As described above and as will be appreciated based on this disclosure, embodiments of the present disclosure may be configured as methods, mobile devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Referring now to FIG. 2, an example method is illustrated. In some embodiments, the example method determines, based on battery fire risk parameters from an EV, if the EV should be allowed access to a controlled-access area. In the example method of FIG. 2, the controlled-access area comprises a primary controlled-access area and a secondary or alternate controlled-access area.

The example method 200 of FIG. 2 starts at step/operation 202. At step/operation 204, a processor (such as, but not limited to, the processing circuitry 122 of the access control system 120 described above in connection with FIG. 1) receives battery fire risk data from an EV. The battery fire risk data may be transmitted from an EV to an access control system upon a request from the driver of the EV to be admitted to the controlled-access area.

At step/operation 206, a processor (such as, but not limited to, the processing circuitry 122 of the access control system 120 described above in connection with FIG. 1) analyzes the battery fire risk parameters to determine if the battery fire risk is acceptable (e.g., low enough to not be an immediate concern) to allow the EV to enter the primary controlled-access area.

If it is determined at step/operation 206 that the battery fire risk is acceptable to allow the EV to enter the primary controlled-access area, the example method 200 continues to step/operation 208. At step/operation 208, a processor (such as, but not limited to, the processing circuitry 122, in conjunction with an access control device, of the access control system 120 described above in connection with FIG. 1) allows the EV to enter the primary controlled-access area. This may involve, for example, opening a gate to the primary controlled-access area or activating a light or other indicator to instruct the driver of the EV to enter the primary controlled-access area.

If it is determined at step/operation 206 that the battery fire risk is not acceptable to allow the EV to enter the primary controlled-access area, the example method 200 continues to step/operation 210. At step/operation 210, a processor (such as, but not limited to, the processing circuitry 122 of the access control system 120 described above in connection with FIG. 1) analyzes the battery fire risk parameters to determine if the battery fire risk is acceptable (e.g., somewhat elevated but still low enough to not be an immediate concern) to allow the EV to enter the alternate controlled-access area.

If it is determined at step/operation 210 that the battery fire risk is acceptable to allow the EV to enter the alternate controlled-access area, the example method 200 continues to step/operation 212. At step/operation 212, a processor (such as, but not limited to, the processing circuitry 122, in conjunction with an access control device, of the access control system 120 described above in connection with FIG. 1) allows the EV to enter the alternate controlled-access area. This may involve, for example, opening a gate to the alternate controlled-access area and/or activating a light or other indicator to instruct the driver of the EV to enter the alternate controlled-access area.

If it is determined at step/operation 210 that the battery fire risk is not acceptable to allow the EV to enter the alternate controlled-access area, the example method 200 continues to step/operation 214. At step/operation 214, a processor (such as, but not limited to, the processing circuitry 122, in conjunction with an access control device, of the access control system 120 described above in connection with FIG. 1) denies access entirely to the controlled-access area. This may involve, for example, keeping a gate to the controlled-access area closed and/or activating a light or other indicator to indicate to the driver of the EV that entry to the controlled-access area has been denied.

The example method 200 of FIG. 2 stops at step/operation 216. In some embodiments, steps/operations 204-214 are repeated every time an EV requests access to a controlled-access area.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation, unless described otherwise.

## Claims

1. An apparatus comprising at least one processor and at least one non-transitory memory comprising program code, wherein the at least one non-transitory memory and the program code are configured to, with the at least one processor, cause the apparatus to at least:
receive data from an electric vehicle (EV) related to a fire risk in a battery of the EV; and
determine, using the data received from the EV, whether to allow the EV to enter a controlled-access area.

2. The apparatus of claim 1, wherein the data received from the EV comprises real time and/or historical data corresponding to one or more battery fire risk parameters related to the EV.

3. The apparatus of claim 2, wherein the one or more battery fire risk parameters related to the EV are selected from the group consisting of electrolyte outgassing from the battery of the EV, a battery voltage of the EV, a battery discharge current of the EV, a charging battery voltage of the EV, a charging battery current of the EV, a temperature of the battery of the EV, a pressure within the battery of the EV, a detected shock, acceleration, and/or deceleration, a geometry of the battery of the EV, a detection of smoke, a detection of an aerosol, a cumulative operating time of the battery of the EV, a serial number of the battery of the EV, a model number of the battery of the EV, and a model number of the EV.

4. The apparatus of claim 1, wherein the at least one non-transitory memory and the program code are configured to, with the at least one processor, cause the apparatus to determine whether to allow the EV to enter the controlled-access area using the data received from the EV and using data received from one or more third parties.

5. The apparatus of claim 4, wherein the data received from one or more third parties comprise data related to other EVs of a same model and/or data related to other batteries of a same model and/or type.

6. The apparatus of claim 1, wherein the data received from the EV comprises a battery fire risk analysis based on one or more battery fire risk parameters related to the EV; and
wherein the one or more battery fire risk parameters related to the EV are selected from the group consisting of electrolyte outgassing from the battery of the EV, a battery voltage of the EV, a battery discharge current of the EV, a charging battery voltage of the EV, a charging battery current of the EV, a temperature of the battery of the EV, a pressure within the battery of the EV, a detected shock, acceleration, and/or deceleration, a geometry of the battery of the EV, a detection of smoke, a detection of an aerosol, a cumulative operating time of the battery of the EV, a serial number of the battery of the EV, a model number of the battery of the EV, and a model number of the EV.

7. The apparatus of claim 1, wherein the at least one non-transitory memory and the program code are configured to, with the at least one processor, cause the apparatus to determine whether to allow the EV to enter an alternate controlled-access area instead of the controlled-access area.

8. The apparatus of claim 1, wherein the at least one non-transitory memory and the program code are configured to, with the at least one processor, cause the apparatus to determine whether to allow the EV to enter the controlled-access area based on a comparison of one or more data points of the data received from the EV to one or more respective thresholds and/or an analysis of one or more trends of the data received from the EV.

9. A computer-implemented method comprising:
receiving data from an electric vehicle (EV) related to a fire risk in a battery of the EV; and
determining, using the data received from the EV, whether to allow the EV to enter a controlled-access area.

10. The computer-implemented method of claim 9, wherein the data received from the EV comprises real time and/or historical data corresponding to one or more battery fire risk parameters related to the EV; and
wherein the one or more battery fire risk parameters related to the EV are selected from the group consisting of electrolyte outgassing from the battery of the EV, a battery voltage of the EV, a battery discharge current of the EV, a charging battery voltage of the EV, a charging battery current of the EV, a temperature of the battery of the EV, a pressure within the battery of the EV, a detected shock, acceleration, and/or deceleration, a geometry of the battery of the EV, a detection of smoke, a detection of an aerosol, a cumulative operating time of the battery of the EV, a serial number of the battery of the EV, a model number of the battery of the EV, and a model number of the EV.

11. The computer-implemented method of claim 9, wherein the method further comprises determining whether to allow the EV to enter the controlled-access area using the data received from the EV and using data received from one or more third parties.

12. The computer-implemented method of claim 11, wherein the data received from one or more third parties comprise data related to other EVs of a same model and/or data related to other batteries of a same model and/or type.

13. The computer-implemented method of claim 9, wherein the data received from the EV comprises a battery fire risk analysis based on one or more battery fire risk parameters related to the EV; and
wherein the one or more battery fire risk parameters related to the EV are selected from the group consisting of electrolyte outgassing from the battery of the EV, a battery voltage of the EV, a battery discharge current of the EV, a charging battery voltage of the EV, a charging battery current of the EV, a temperature of the battery of the EV, a pressure within the battery of the EV, a detected shock, acceleration, and/or deceleration, a geometry of the battery of the EV, a detection of smoke, a detection of an aerosol, a cumulative operating time of the battery of the EV, a serial number of the battery of the EV, a model number of the battery of the EV, and a model number of the EV.

14. The computer-implemented method of claim 9, wherein the method further comprises determining whether to allow the EV to enter an alternate controlled-access area instead of the controlled-access area.

15. The computer-implemented method of claim 9, wherein the method further comprises determining whether to allow the EV to enter the controlled-access area based on a comparison of one or more data points of the data received from the EV to one or more respective thresholds and/or an analysis of one or more trends of the data received from the EV.
